(19) Europäisches Patentamt / European Patent Office / Office européen des brevets

(11) **EP 1 905 585 B1**

(12) **EUROPÄISCHE PATENTSCHRIFT**

(45) Veröffentlichungstag und Bekanntmachung des Hinweises auf die Patenterteilung:
**24.06.2009 Patentblatt 2009/26**

(51) Int Cl.:
*B32B 27/20* *(2006.01)*    *B32B 27/36* *(2006.01)*
*B41M 5/26* *(2006.01)*

(21) Anmeldenummer: **07018351.2**

(22) Anmeldetag: **19.09.2007**

(54) **Laser-markierbare Folie**

Laser markable film

Feuille pouvant être marquée au laser

(84) Benannte Vertragsstaaten:
**DE FR GB IT LU TR**

(30) Priorität: **27.09.2006 DE 102006045495**

(43) Veröffentlichungstag der Anmeldung:
**02.04.2008 Patentblatt 2008/14**

(73) Patentinhaber: **Mitsubishi Polyester Film GmbH**
**65203 Wiesbaden (DE)**

(72) Erfinder:
• **Bennett, Cynthia, Dr.**
**55232 Alzey (DE)**
• **Kliesch, Holger, Dr.**
**65462 Ginsheim-Gustavsburg (DE)**

• **Kuhmann, Bodo**
**65594 Runkel (DE)**
• **Jesberger, Martin**
**55122 Mainz (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
EP-A- 0 991 523    WO-A-01/19612
WO-A-20/04050766    WO-A-20/04050767

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine steife, gut verarbeitbare, beständige Polyester-Folie, die für die Herstellung von Ausweis-Karten, Etiketten geeignet ist und die mittels Laser dauerhaft und in guter Qualität mit Schrift, Zeichen oder Bildern markiert werden kann. Die Markierungen sind schwarz oder grau auf hellem Hintergrund.

Stand der Technik

Lasermarkierung von Kunststoffen wurde in den letzten Jahren entwickelt, um Markierungen aufzubringen, die beispielsweise individuell für den markierten Gegenstand, wie eine Seriennummer auf einem Gerät oder ein Foto auf einer Ausweiskarte, oder auch widerstandsfähig gegen Kratzer oder Lösemittel sind. Markierungen in hoher Qualität werden in der Regel mit gepulsten Lasergeräten mit den Wellenlängen 1064, 532 oder 355 nm (Nd:YAG, Nd:YO$_4$ oder FAYb) ausgeführt, wobei mittels schwenkbarer Spiegel der fokussierte Laserstrahl über die Kunststoffoberfläche fährt. Manche Beschriftungsaufgaben können aber auch mit gepulstem oder "continuous wave" CO$_2$-Laser im Wellenlängenbereich 9,3 bis 10,6 $\mu$m gelöst werden.

Je nach Kunststoff und Rezeptur können Markierungen auf verschiedene Weise aufgebracht werden:

- Gravur - kontrastarme, aber permanente Markierung
- Ablatieren - Abtrag einer (gegebenenfalls farbigen) Oberschicht und Freilegung einer andersfarbigen Unterschicht; gute Kontraste, jedoch keine Farb- bzw. Grautonabstufungen möglich
- Aufschäumen - auf hellem Untergrund kontrastarm, gute Kontraste möglich bei dunklem Hintergrund, Grauabstufungen nicht möglich
- Farbumschlag - durch chemische Reaktionen hervorgerufene Farbänderung im Material, z. B. durch lokale Erwärmung hervorgerufene Karbonisierung des Kunststoffs. Durch Variation der Strahlleistung sind Grau- bzw. Farbabstufungen möglich.

EP-A-0 866 750 beschreibt lasermarkierbare Folien für Etiketten auf der Basis einer weißen PET-Folie, die eine schwarze Beschichtung trägt. Durch Laserbestrahlung wird die schwarze Beschichtung ablatiert und der weiße Untergrund freigelegt. Mit diesem Aufbau sind gute, kontrastreiche, Weiß-auf-Schwarz-Beschriftungen und Zeichnungen möglich. Da es sich hierbei um ein Ablationsverfahren handelt, sind keine Grauabstufungen möglich. Um eine Schwarz-auf-Weiß-Beschriftung mit diesem Aufbau zu erreichen, müsste die gesamte weiße Fläche mit dem Laser abgerastert werden, was unwirtschaftlich ist und lange Zeiten beim Bestrahlen mittels Laser erfordert.

WO 03/18700 und US-A-6,723,259 beschreiben lasermarkierbare Etiketten, die aus einer weißen und einer schwarzen Schicht bestehen. Wenn die obere Schicht weiß eingefärbt ist, ist eine Schwarz-auf-Weiß-Beschriftung bei kurzer Laserstrahlzeit möglich. Aufgrund des Ablationsverfahrens sind aber auch hier keine Grauabstufungen möglich. Das für die Unterschicht verwendete Material (elektronstrahlhärtbares Polyurethanacrylat) ist spröde und weist eine geringe mechanische Festigkeit auf.

Zur Erzielung von kontrastreichen Markierungen mit der Möglichkeit für Grauabstufungen (z. B. für Fotos) ist der Weg über Farbumschlag (Karbonisierung) erforderlich.

Im Vergleich zu den wenigen, oben beschriebenen Arbeiten auf dem Gebiet der lasermarkierbaren, beschichteten Folien gibt es eine Vielzahl von Veröffentlichungen über lasermarkierbare Kunststoff-Formmassen. In der Patent- und sonstigen Literatur findet man allerdings widersprüchliche Aussagen über die Notwendigkeit von speziellen "Laseradditiven" für den einen oder anderen Kunststoff. Dies liegt vermutlich daran, dass bestimmte Additive, die regelmäßig für andere Zwecke (z. B. als Füllstoff, zur Einfärbung oder Flammhemmung) Kunststoffen zugegeben werden, auch das Lasermarkierergebnis begünstigen können. Als "lasermarkierbar auch ohne Additiv" werden in der Literatur besonders häufig Polycarbonat, PBT und ABS genannt, aber selbst bei diesen Kunststoffen werden Additive oft zugegeben, um die Lasermarkierbarkeit weiter zu verbessern.

Um den Farbumschlag bei Kunststoff-Formmassen zu unterstützen und zu fördern, wurden verschiedene Additive entwickelt. Durch die Zugabe eines "Absorbers", ein Stoff, der das Laserlicht absorbiert und in Wärme umwandelt, kann der Wärmeeintrag und die Karbonisierung verbessert werden. Dies ist auch bei Kunststoffen wie Polycarbonat der Fall, die von sich aus leicht karbonisieren. EP-A-0 198 771 beschreibt die Verwendung von Antimonmetall oder -oxid als Absorber. In JP-A-02-226470 wird die Karbonisierung durch den Absorber Ruß unterstützt. In DE-A-199 61 304 wird beschichtetes Graphit als Absorber für die Lasermarkierung eingesetzt. DE-A-195 22 397 zeigt die Verwendung von mit Metalloxiden beschichtetem Glimmer (Schichtsilikat) als Absorber. Absorber auf der Basis von Zinn-Antimon-Mischoxiden werden in US-A-6 693 657 beschrieben. In WO 2006-42714 wird die Dunkelfärbung von Kunststoffen durch die Verwendung von Additiven auf der Basis von verschiedenen phosphorhaltigen Mischoxiden von Eisen, Kupfer, Zinn und/oder Antimon erzeugt.

Wenn ein Farbumschlag durch Karbonisierung in einem Kunststoff gewünscht wird, der sich nur mäßig oder gar nicht karbonisieren lässt, kann man einen Absorber mit einem leicht karbonisierenden Material kombinieren, wie zum Beispiel in EP-A-0 991 523 vorgeschlagen. WO 2004/50766 und WO 2004/50767 offenbaren ein Laser-Markier-Additiv mit einem besonderen Aufbau, in dem der Absorber mit dem leicht karbonisierende Material fest in einem Kern-Schale-Aufbau vorhanden ist.

Polyvinylchlorid-Folien (PVC-Folien) werden häufig in der Herstellung von Karten, z. B. Kreditkarten, die individualisiert werden müssen, verwendet. Oft werden die Karten entsprechend mit Nummern und Schrift geprägt, d. h. thermoplastisch verformt, jedoch eignet sich dieses Verfahren nicht für jede Art der Personalisierung. Die Verarbeitbarkeit der PVC-Folien zu Karten wird in der Regel als gut bezeichnet, sofern keine Lasermarkierung benötigt wird. Die thermisch geprägten Individualisierungsmerkmale können jedoch in heißen Umgebungen, z. B. im Innern eines Automobils in der Sonne, geschädigt werden. Daher besteht Interesse an der Lasermarkierung. Allerdings ist die Laserbearbeitung von PVC-Folien problematisch. Grund dafür ist, dass PVC sich bei den hohen Temperaturen von einigen Hundert Grad, die beim Laserbestrahlen auftreten, in einer Reißverschlussreaktion unter Abgabe von gasförmiger, ätzender Salzsäure zersetzt. Die Abgabe von gasförmiger Salzsäure macht spezielle, besonders säurefeste Absaug- und Filtervorrichtungen für die Lasermarkierung erforderlich, die zum Beispiel von der Fa. Bofa, (Dorset, UK) angeboten werden. Aufgrund der Gasentwicklung und dem damit verbundenen Materialabtrag eignet sich PVC nur für Gravurmarkierungen. Um guten Kontrast zu erzeugen, wird oft eine gefärbte, aufgedruckte Lackschicht bei der Gravur mit ablatiert.

Neben den Schwierigkeiten bei der Lasermarkierung brechen Karten aus PVC relativ häufig und müssen oft nach kurzer Zeit ersetzt werden. Ein robusteres, lasermarkierbares Folienmaterial, das kein ätzendes Gas bei der Laserbearbeitung abgibt, wäre von Vorteil.

Karten aus Polycarbonat sind viel robuster als PVC-Karten und lassen sich wegen der guten Carbonisierbarkeit sehr gut sogar mit guten Grauabstufungen lasermarkieren, beispielsweise für die Wiedergabe von Fotos in Ausweisen und Führerscheinen. Nachteilig bei Polycarbonat sind die hohen Materialkosten. Polycarbonat ist außerdem nicht sehr steif, da der Kunststoff einen geringen Elastizitätsmodul besitzt, was sich in einer geringeren Kratzfestigkeit und schlechterer Verarbeitbarkeit bei der Kartenherstellung äußert.

Es hat auch nicht an Versuchen gefehlt, lasermarkierbare Alternativmaterialien zu finden.

In DE-A-196 31 283 und EP-A-1 458 574 werden lasermarkierbare laminierte Karten beschrieben, die Kernschichten aus ABS und Deckschichten aus amorphen Polyestern (PETG, PCTG) bzw. Acrylat besitzen. Die Verwendung von amorphen, nicht orientierten Polyestern in der Außenschicht bedeutet jedoch, dass solche Karten nicht sehr robust sind.

In JP-A-07-276 575 und JP-A-2002-273 832 werden lasermarkierbare Drei-Schicht-Karten aus einer PBT-Kernschicht und zwei PET-Deckschichten durch Laminierung mittels eines Klebers bzw. Koextrusion offenbart. In beiden Fällen enthält die PBT-Schicht Laserabsorber. Da zumindest die PBT-Schicht und wahrscheinlich sogar alle Schichten unorientiert sind, ist die Steifigkeit gering. Beim Lasermarkieren kristallisiert die PET-Schicht, wodurch der Kontrast nicht optimal ist.

Weiß eingefärbte, ein- oder mehrschichtige, biaxial orientierte fixierte PET-Folien sind bekannt (siehe zum Beispiel in EP-A-1 256 597 oder EP-A-1 125 967) und kostengünstiger als Polycarbonat-Folien. Diese Folien haben zwar die gewünschte Steifigkeit und Beständigkeit und eignen sich sehr gut für die Herstellung von Etiketten bzw. Karten, sind jedoch nicht ausreichend lasermarkierbar. EP-A-0 605 130 beschreibt coextrudierte Polyesterfolien, die eine weiß eingefärbte und eine transparente Deckschicht enthalten. Auch diese Folien haben die gewünschte Stabilität und Beständigkeit, sind aber auch nicht ausreichend lasermarkierbar.

Aufgabenstellung

Aufgabe der vorliegenden Erfindung war es, Folien für die Anwendung in Ausweisen, Karten oder Etiketten zur Verfügung zu stellen, die die Nachteile der Folien nach dem Stand der Technik nicht mehr aufweisen und sich insbesondere dadurch auszeichnen, dass

- dunkle Zeichen mit gutem Kontrast mit einem Beschriftungslaser erzeugt werden können,
- Grauabstufungen beim Markieren möglich sind, so dass Bilder (Fotos) dargestellt werden können,
- sie eine gute Steifigkeit aufweisen, d. h. einen Elastizitätsmodul (E-Modul) von > 3,5 GPa in Längs- und Querrichtung, und
- dass sie aus einem kostengünstigeren Material als Polycarbonat hergestellt sind.

Lösung der Aufgabe

Die Aufgabe wird gelöst durch eine biaxial orientierte, fixierte, mindestens zweischichtige coextrudierte Folie aus Polyethylenterephthalat (PET) oder Polyethylen-2,6-naphthalat (PEN), wobei das PET oder PEN zusätzliche, von Ethylenglykol und/oder Terephthalsäure oder Naphthalin-2,6-dicarbonsäure verschiedene Comonomer-abgeleitete Bausteine enthalten kann, wobei die Folie eine Basisschicht und mindestens eine Deckschicht umfasst und wobei die Basisschicht einen Laserabsorber, der mit einem carbonisierenden Polymeren beschichtet ist, und ein Weißpigment enthält.

Selbst wenn ein sehr wirksames Laser-Markier-Additiv zusammen mit dem Weißpigment verwendet wurde, waren die Ergebnisse zunächst nicht zufriedenstellend, weil nur mittlere Grautöne erreicht werden konnten. Überraschenderweise hat sich gezeigt, dass erst die Kombination des Laser-Markier-Additivs mit einem Weißpigment und mit einem speziellen coextrudierten Schichtaufbau zum Erfolg führt.

Ausführungsformen

Die erfindungsgemäßen coextrudierten Polyethylenterephthalat- oder Polyethylennaphthalat-Folien weisen mindestens zwei Schichten auf. Sie bestehen aus einer weiß eingefärbten Markierschicht B, der mit dem Laser markiert wird, und mindestens einer transparenten oder durchscheinenden Deckschicht A, A' oder C.

Die Deckschichten (A, A' und C) sind mindestens 3 $\mu$m, bevorzugt mindestens 5 $\mu$m, besonders bevorzugt mindestens 7 $\mu$m und ganz besonders bevorzugt mindestens 12 $\mu$m, dick. Die Markierschicht (B) hat eine Mindestdicke von 7 $\mu$m, bevorzugt 15 $\mu$m, besonders bevorzugt 20$\mu$ m und ganz besonders bevorzugt 25 $\mu$m. Die Gesamtdicke der Folie beträgt 23 $\mu$m bis 1 mm, bevorzugt 30 $\mu$m bis 1 mm, besonders bevorzugt 40 bis 700 $\mu$m und ganz besonders bevorzugt 65 bis 600 $\mu$m. Die Folie darf weitere Schichten enthalten.

In einer bevorzugten Ausführungsform ist die Folie dreischichtig aufgebaut, wobei die Markierschicht (B) beidseitig Deckschichten (A, A' oder C) trägt. Diese Ausführungsform ist für die Lasermarkierung der freitragenden Folie geeignet. Die Deckschichten können gleich oder verschieden sein. Sie können die gleiche Rezeptur und Dicke haben (ABA-Aufbau), die gleiche Rezeptur, jedoch unterschiedliche Dicke haben (ABA'-Aufbau) oder unterschiedliche Rezeptur (ABC-Aufbau) haben.

In einer weiteren bevorzugten Ausführungsform besteht die Folie aus vier Schichten, wobei die vierte Schicht D auf einer der Deckschichten aufgebracht ist, in einem ABAD-, ABA'D- oder ABCD-Aufbau. In dieser Ausführungsform besteht das Matrixpolymere der Schichten A, A', B bzw. C aus Polyethylenterephthalat oder Polyethylennaphthalat und das der Schicht D aus einem amorphen oder niedrigschmelzenden Polymeren, das zur Siegelung gegen sich selbst oder gegen andere Gegenstänen dienen kann. Diese Ausführungsform ist z. B. für die Herstellung von lasermarkierbaren Beuteln, siegelbaren Deckeln oder Blechkaschierung geeignet.

In einer weiteren Ausführungsform ist die Folie zweischichtig (AB-Aufbau). In dieser Ausführungsform sollte die Markierschicht/Rückseite B vor dem Lasermarkiervorgang mit einem anderen Material fest verbunden sein, zum Beispiel durch Aufschmelzen auf Blech oder Metall oder durch Kaschieren mit einem Kleber. Die Lasereinstrahlung erfolgt über die Deckschicht A.

In einer weiteren Ausführungsform, die ebenfalls für die Laminierung auf Blechen bestimmt ist, besteht die Folie aus drei Schichten, ABD, wobei die Schicht D - wie oben - aus einem amorphen, niedrigschmelzenden Polymeren besteht, das für die Siegelung gegen andere Gegenstände dienen kann. In dieser Ausführungsform ist die Mindestdicke der Markierschicht B vorzugsweise 60 $\mu$m und besonders bevorzugt 75 $\mu$m.

Zusammensetzung der Schichten

Die Matrixpolymere der Schichten A, A', B und C bestehen hauptsächlich aus Polyethylenterephthalat (PET) oder Polyethylen-2,6-naphthalat (PEN). Zur Justierung der Eigenschaften können zur Herstellung des PET bzw. PEN zusätzliche Comonomere verwendet werden, vorzugsweise in einer Menge von bis zu 10 Mol-% (bezogen auf PET bzw. PEN), allerdings nur unter der Voraussetzung, dass das Polymere kristallisierfähig bleibt und einen Schmelzpunkt >240 °C hat. Beispielsweise sind folgende Comonomere geeignet:

a) aromatische 1- bis 2-kernige Dikarbonsäuren wie Isophthalsäure, 2,6-Naphthalindicarbonsäure (in PET), Terephthalsäure (in PEN),
b) aliphatische Dicarbonsäuren mit 3 bis 10 Kohlenstoffatomen,
c) lineare oder cyclische aliphatische Diole mit 3 bis 10 Kohlenstoffatomen, insbesondere 1,3-Propandiol, 2-Methyl-1,3-propandiol, 1,4-Butandiol und 1,4-Cyclohexandimethanol,
d) Diethylen- und Triethylenglykol.

Flexible Comonomere wie lange aliphatische Diole oder Polyethylenglykole sind weniger geeignet, weil sie die mechanischen Eigenschaften so weit verändern, dass das Ziel einer steifen Folie mit einem hohen E-Modul nicht eingehalten werden kann.

Das Matrixpolymere der Schicht D soll niedriger schmelzend oder amorph sein. Es kann beispielsweise ein PET oder PEN sein, das größere Mengen der oben genannten Comonomeren a) bis d) enthält. Alternativ kann es ein aliphatischer Polyester oder ein teilweise umgeestertes Blend aus PET oder PEN und einem aliphatischen Polyester sein. Die Schicht D kann auch ein vollkommen anderes Polymeres oder Polymergemisch sein. Wesentlich ist nur, dass die Schicht D auf der restlichen Folie haftet und niedriger schmilzt als das Matrixpolymere der Schicht B.

Das Matrixpolymere der Schicht B enthält als Weißpigment anorganische oder organische Partikel in einer Konzentration, die dafür ausreicht, ein helles, weitgehend opakes Aussehen in der biaxial orientierten Folie zu erzeugen. Je nach gewählter Partikelart und -größe und gewünschtem Aussehen kann die Menge von 1 bis 30 Gew.% variieren. Der Primär-Partikeldurchmesser ($d_{50}$) kann von 0,01 bis 5 $\mu$m variieren. Als anorganische Partikel können Calciumcarbonat, Bariumsulfat, Apatit, gefällte oder pyrogene Kieselsäuren, Titandioxid (Anatas und Rutil), Aluminiumoxid, Zeolithe und andere Silikate wie zum Beispiel Aluminiumsilikate (Tonerde) verwendet werden, wobei Bariumsulfat und Titandioxid besonders bevorzugt sind.

Wenn organische Partikel in der Schicht B verwendet werden, können diese in Form von vernetzten Polymerteilchen wie zum Beispiel vernetzten Polyacrylat- oder Polystyrol-Teilchen vorliegen. Es ist auch möglich, ein nicht schmelzendes oder ein höher als das Matrixpolymere schmelzendes Polymer-Pulver mit geeigneter Korngröße zu verwenden. Als weitere Alternative kann man ein unverträgliches, niedriger schmelzendes Polymeres verwenden wie zum Beispiel Polyethylen, Polypropylen, Ethylen-Norbornen-Copolymerisate (Topas® der Fa. Topas Advanced Polymers, Frankfurt-Höchst, DE) oder Metathese-Polymere des Norbornens (Zeonex® der Fa. Zeon Corporation, Tokyo, JP).

Das Matrixpolymere der Schicht B enthält außerdem ein Laser-Markier-Additiv, bestehend aus einem Absorber im Wellenlängenbereich des zu verwendenden Lasers, der mit einem leicht karbonisierenden Polymeren beschichtet ist. Vorteilhaft ist es, wenn dieses Laser-Additiv einen Kern-Schale-Aufbau hat, wobei das leicht carbonisierende Polymere (der Kern) von einem kompatibilisierenden Polymeren umhüllt ist (die Schale) und Kern und Schale miteinander chemisch gebunden sind. Besonders vorteilhaft ist es, wenn das Kern-Schale-Additiv in einem weiteren, niedrig schmelzenden, scherverdünnenden Polymeren eingebracht ist, das es erlaubt, das Additiv gut in dem Matrixpolymer der Schicht B zu verteilen. Solche Laser-Markier-Additive und deren Verwendung in Formmassen sind in WO 2004/50766 und WO 2004/50767 beschrieben und werden von der Fa. DSM, NL, unter dem Markennamen Micabs® kommerziell angeboten. Vorteilhaft ist es, wenn das leicht carbonisierende Polymere ein Polycarbonat, ein Polyamid oder ein Polyester ist, wenn das kompatibilisierende Polymere ein Polyethylen oder Polypropylen ist, das mit einem Maleinsäureanhydrid modifiziert ist, und wenn das scherverdünnende Polymere ein Polyethylen oder Polypropylen ist. Ebenfalls vorteilhaft ist es, wenn die Korngröße des Absorbers im Bereich von 100 nm bis 10 $\mu$m liegt, und besonders vorteilhaft, wenn sie im Bereich von 500 nm bis 2 $\mu$m liegt.

Die Matrix-Polymere der Schichten A, A', C, B und D können anorganische Teilchen enthalten, die dazu dienen, die Folie verarbeitbar und wickelbar zu machen bzw. den Oberflächenglanz einzustellen. Wichtig ist, dass die Menge und Art der Partikel so gewählt und auf die Schichtdicke abgestimmt wird, dass die belaserte Schrift, Zeichen oder Bilder in der Schicht B gut sichtbar bleiben. Prinzipiell kommen Partikel aus der Gruppe Calciumcarbonat, Bariumsulfat, Apatit, gefällte oder pyrogene Kieselsäuren, Titandioxid (Anatas oder Rutil), Aluminiumoxid, Zeolithe oder andere Silikate, wie zum Beispiel Aluminiumsilikate (Tonerde), hierfür in Betracht, wobei für diese Schichten Siliziumdioxid-Partikel wegen ihrer guten Einbindung in die Matrix besonders bevorzugt sind.

Wenn keine der äußeren Matrix-Schichten anorganische Teichen enthält, ist es vorteilhaft, wenn die Folie eine partikelhaltige Beschichtung zwecks besserer Schlupf- und Wickelbarkeit trägt.

Zur Justierung der Farbe oder zur Erzeugung einer bunten Folie können Farbstoffe, Farbpigmente oder optische Aufheller in den Schichten A, A', B, C oder D enthalten sein. Weitere Additive wie beispielsweise Dispergierhilfsmittel für Partikel, Oxidations-Stabilisatoren, UV-Absorber oder Flammhemmer können ebenfalls enthalten sein.

<u>Verfahren</u>

Die Polyester-Matrixpolymere der Schichten A bis C werden durch Polykondensation hergestellt, entweder ausgehend von Dicarbonsäuren und Ethylenglykol (sog. "PTA-Verfahren") oder auch ausgehend von den Estern der Dicarbonsäuren, vorzugweise den Dimethylestern, und Ethylenglykol (sog. "DMT-Verfahren"). Verwendbare Polyethylenterephthalate haben SV-Werte im Bereich von 600 bis 900 und Polyethylen-2,6-naphthalate von ca. 500 bis 800.

Wenn Schicht D ein Polyester ist, wird es in der Regel auf analoge Weise hergestellt.

Die Weißpigmente, anorganischen Partikel oder vernetzten organischen Partikel der Schichten A, A', B, C und D können bereits bei der Herstellung des Polyesters zugegeben werden. Hierzu werden die Partikel in Ethylenglykol dispergiert, gegebenenfalls gemahlen, dekantiert usw. und dem Reaktor entweder im (Um)-Esterungs- oder Polykondensationsschritt zugegeben. Alternativ kann ein konzentriertes partikelhaltiges oder additivhaltiges Polyester-Masterbatch mit einem Zweischneckenextruder hergestellt werden und bei der Folienextrusion mit partikelfreiem Polyester verdünnt werden. Eine weitere Möglichkeit besteht darin, Partikel und Additive direkt bei der Folienextrusion in einem Zweischneckenextruder zuzugeben.

Nicht vernetzte organische Partikel werden entweder in einem Zweischneckenextruder zu einem Masterbatch verarbeitet oder direkt bei der Folienextrusion zugegeben.

Wenn das Laser-Markier-Additiv niedrigschmelzend ist, kann es nur in kleinen, gegebenenfalls nicht ausreichenden Mengen in einem Einschneckenextruder zugegeben werden, ohne die Förderung zu stören. Soll ein Einschneckenextruder für die Schicht B verwendet werden, ist es vorteilhaft, vorher in einem Zweischneckenextruder eine Mischung aus dem Laser-Markier-Additiv und der Polyester-Matrix herzustellen. Eine solche Mischung hat den Polyester als Matrix-Phase und kann problemlos getrocknet und extrudiert werden, ohne zu verkleben. Bei Verwendung eines Zwei- oder Mehrschneckenextruders für die Schicht B kann das Laser-Markier-Additiv direkt bei der Folienextrusion zugegeben werden.

Wenn Einschneckenextruder verwendet werden, dann hat es sich als vorteilhaft erwiesen, die Polyester vorher zu trocknen. Bei Verwendung eines Zweischneckenextruders mit Entgasungszone kann auf den Trocknungsschritt verzichtet werden.

Zunächst wird das Polymere bzw. die Polymermischung der einzelnen Schichten in einem Extruder komprimiert und verflüssigt. Dann werden die Schmelzen in einer Mehrschichtdüse zu flachen Schmelzefilmen ausgeformt, übereinander geschichtet, durch eine Breitschlitzdüse gepresst und auf einer Kühlwalze und einer oder mehreren Abzugswalzen abgezogen, wobei sie abkühlen und sich verfestigen.

Die erfindungsgemäße Folie wird biaxial orientiert, d. h. biaxial gestreckt. Die biaxiale Verstreckung der Folie wird am häufigsten sequenziell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Das Verstrecken in Längsrichtung lässt sich mit Hilfe zweier entsprechend dem angestrebten Streckverhältnis verschieden schnell laufender Walzen durchführen. Zum Querverstrecken benutzt man im Allgemeinen einen entsprechenden Kluppenrahmen.

Statt der sequenziellen Streckung ist auch eine simultane Streckung der Folie möglich, aber nicht notwendig.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 80 bis 130 °C (Aufheiztemperaturen 80 bis 130 °C) und in Querrichtung in einem Temperaturbereich von 90 (Beginn der Streckung) bis 140 °C (Ende der Streckung) durchgeführt. Das Längsstreckverhältnis liegt im Bereich von 2,0:1 bis 5,5:1, bevorzugt von 2,2:1 bis 5,0:1. Das Querstreckverhältnis liegt allgemein im Bereich von 2,4:1 bis 5,0:1, bevorzugt von 2,6:1 bis 4,5:1.

Vor der Querstreckung können eine oder beide Oberfläche(n) der Folie nach den an sich bekannten Verfahren in-line beschichtet werden. Die In-line-Beschichtung kann beispielsweise zu einer verbesserten Haftung zwischen einer Metallschicht oder einer Druckfarbe und der Folie, zu einer Verbesserung des antistatischen Verhaltens oder des Verarbeitungsverhaltens der Folie führen. Wenn die äußeren coextrudierten Schichten keine anorganischen Partikel zur Verbesserung der Schlupf- und Wickelcharakteristik aufweisen, so kann an dieser Stelle eine partikelhaltige Beschichtung aufgebracht werden.

Bei der nachfolgenden Thermofixierung wird die Folie über eine Zeitdauer von etwa 0,1 bis 10 s unter mechanischer Spannung bei einer Temperatur von 150 bis 250 °C gehalten. Anschließend wird die Folie in üblicher Weise aufgewickelt.

Eigenschaften und Vorteile der erfindungsgemäße Folie

Die erfindungsgemäße Folie zeichnet sich durch exzellente Lasermarkierbarkeit mit Lasern im Wellenlängenbereich von 157 nm bis 10,6 $\mu$m, insbesondere mit $CO_2$-Lasern (10,6 $\mu$m), Nd:YAG-Lasern (1064, 532, 355, 266 nm), Nd:YO$_4$-Lasern (1064, 532, 355 nm) und so genannten Faser-Lasern ("FAYb"; ca. 1060 nm), aus.

Dieses gute Ergebnis wird durch die Kombination der drei Merkmale der Erfindung in der biaxial orientierten Polyesterfolie erreicht: spezieller Schichtaufbau (lasermarkierbare Basisschicht (B), transparente Deckschicht (A)), die Verwendung eines speziellen Laser-Markier-Additivs zusammen mit einem Weißpigments in der Schicht B. Bei einem anderen Schichtaufbau, nämlich ohne die Deckschicht A, werden keine dunklen Markierungen erhalten, sondern nur hellgraue, wobei eine Erhöhung der Laserleistung zu keiner dunkleren Farbe führt, sondern lediglich zum Durchbrennen der Folie. Wenn statt des erfindungsgemäßen Laser-Markier-Additivs (Laserabsorber mit leicht karbonisierender Beschichtung) ein einfacher, kommerziell erhältlicher Laser-Absorber verwendet wird, werden ebenfalls nur hellgraue Markierungen erhalten. Wenn das erfindungsgemäße Laser-Markier-Additiv verwendet wird, aber die Weißpigmentierung der Schicht B weggelassen wird, findet fast gar keine Markierung der transluzenten Folie statt.

Im Gegensatz zu der weißen PET-Folie mit der laserablatierbaren schwarzen Beschichtung nach EP-A-0 866 750 sind mit der erfindungsgemäßen Folie Schwarz-auf-Weiß-Schriften in kürzeren Bestrahlungszeiten und Grautonabbildungen für Fotos möglich.

Im Gegensatz zu laserablatierbaren Etiketten, bestehend aus einer schwarzen und weißen Schicht nach WO 03/18700 und US-A-6,723,259, ist die erfindungsgemäße Folie wesentlich steifer und ermöglicht, Bilder wie Fotos über Grautonabstufung darzustellen. Darüber hinaus sind Elektronenstrahlgeräte im Falle der erfindungsgemäßen Folie nicht erforderlich.

Im Vergleich zu den beiden ablatierbaren Materialien hat die erfindungsgemäße Folie den weiteren Vorteil, dass die Laserbeschriftung nicht nur an der Folienoberfläche liegt, sondern in der abgedeckten Schicht B vorliegt. Somit ist die Markierung permanent, fälschungssicher und nicht abkratzbar.

Im Vergleich zu den häufig für Karten verwendeten, mit Laserabsorber ausgestatteten PVC-Folien, ist die erfindungsgemäße Folie wesentlich temperaturstabiler, was der Langlebigkeit der Karten im Zusammenhang mit Umwelteinflüssen (z. B. Wärmeentwicklung in geparkten Autos) zugute kommt. Dies gilt auch für PVC-Ersatzstoffe wie PETG. Bei der Lasermarkierung der erfindungsgemäßen Folie entsteht kein gesundheitsschädliches, korrosives Gas.

Im Vergleich zu den ebenfalls häufig für Karten verwendeten, mit oder ohne Laserabsorber ausgestatteten Polycarbonat-Folien ist die erfindungsgemäße Folie wesentlich steifer. Da die Biegesteifigkeit eines Materials proportional zum Zug-E-Modul ist, hat die erfindungsgemäße Folie bei gleicher Dicke eine ca. 60 % höhere Biegesteifigkeit im Vergleich zu einer Polycarbonat-Folie (E-Modul ca. 4 GPa vs. <2.5 GPa bei Polycarbonat). Außerdem ist PET kostengünstiger als Polycarbonat.

<u>Verwendungen</u>

Die erfindungsgemäße Folie ist für die Anwendung in Ausweisen und anderen hochwertigen Karten, die individuelle Etikettierung von langlebigen Gütern, die gegebenenfalls widrige Umgebungsbedingungen aushalten müssen (z. B. Elektronikteile, Transportmittel, Luft- und Raumfahrt, Industrieanlagen, medizinische Geräte usw.), gut geeignet. Wenn die erfindungsgemäßen Folien zum Beispiel in der Stahlblechkaschierung anstelle von Lack eingesetzt werden, bieten sie einen exzellenten und widerstandsfähigen Korrosionsschutz kombiniert mit Laserbeschriftbarkeit und ein ansprechendes Aussehen.

<u>Messmethoden:</u>

Zur Charakterisierung der Rohstoffe und der Folien wurden im Rahmen der vorliegenden Erfindung die folgenden Messmethoden benutzt:

**Messung des mittleren Partikel-Durchmessers $d_{50}$**

Die Bestimmung des mittleren Durchmessers $d_{50}$ wird mittels Laser auf einem Horiba LA 500 mittels Laserdiffraktion durchgeführt (andere Messgeräte sind z. B. Malvern Master Sizer oder Sympathec Helos, welche das gleiche Messprinzip verwenden). Die Proben werden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Die Partikelgrößenverteilung ist durch zwei Parameter gekennzeichnet, den Medianwert $d_{50}$ (= Lagemaß für den Mittelwert) und das Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse den gewünschten $d_{50}$-Wert.

**Primärkorngröße von Nanoteilchen (Aerosil® und Nyacol®)**

Die Bestimmung der mittleren Größe der Primärteilchen erfolgt an transmissionselektronenmikroskopischen (TEM) Aufnahmen des zu untersuchenden Produktes. Wenn die Probe als Folie oder Kunststoffgranulat vorliegt, so ist die TEM-Untersuchung an Mikrotomschnitten durchzuführen.

**Mechanische Eigenschaften**

Die mechanischen Eigenschaften werden über Zugprüfung, angelehnt an DIN EN ISO 572-1 und -3, an 100 mm x 15 mm großen Folienstreifen bestimmt. Die Längenänderung wird über einen Traversenwegaufnehmer gemessen. Der E-Modul wird bei einer Zuggeschwindigkeit von 10 %/min als Steigung zwischen 0,2 und 0,3 Dehnung bestimmt. Der σ5-Wert (Kraft bei 5 % Dehnung) wird mit einer Zuggeschwindigkeit von 100 %/min gemessen.

**SV-Wert (standard viscosity)**

Die Standardviskosität SV (DCE) wird, angelehnt an DIN 53 726, bei einer Konzentration von 1 % in Dichloressigsäure gemessen. Aus der relativen Viskosität ($\eta_{rel}$) wird der dimensionslose SV-Wert wie folgt ermittelt:

$$SV = (\eta_{rel}-1) \times 1000.$$

Die intrinsische Viskosität (IV) korreliert wie folgt mit der Standardviskosität

$$IV = [\eta] = 6{,}907 \cdot 10^{-4} \ SV \ (DCE) + 0{,}063096 \ [dl/g]$$

**Lasermarkierbarkeit**

Mit einem Nd:YO$_4$-Beschriftungslaser VectorMark® VMc5 der Fa. Trumpf in Schramberg (1064 nm) werden Testraster auf die Folien mit den folgenden Parametern geschrieben:

| | |
|---|---|
| Leistung (P): | 10 bis 60 % in 10er Schritten |
| Frequenz: | 10 bis 60 kHz in 10er Schritten |
| Geschwindigkeit: | 1200 mm/s |

Fast alle Proben sind unter diesen Bedingungen mehr oder weniger gut markierbar. Es wird für jede Probe das Rasterfeld ausgewählt, das im Hinblick auf Dunkelheit und Gleichmäßigkeit der Markierung am besten ist, ohne durchgebrannte Löcher aufzuweisen. Für jede Probe wird das so ermittelte beste Feld dann nach den Kriterien Farbe und Oberflächengüte optisch benotet. Die Noten 5 und A sind die besten und 0 bis 2 und D nicht zufriedenstellend. Eine aufgeraute Oberfläche (Noten B und C) könnte für manche Anwendungen gut sein, für andere wird sie unerwünscht sein.

| Note | Farbe | Note | Oberfläche |
|---|---|---|---|
| 5 | schwarz | A | glatt, geschlossen |
| 4 | dunkelgrau | B | leicht aufgeraut |
| 3 | mittelgrau | C | deutlich aufgeraut |
| 2 | hellgrau | D | großer Dickenverlust durch Ablation |
| 1 | sehr helles grau | | |
| 0 | keine Verdunkelung | | |

Außerdem wurden in einigen Beispielen Grauton-Bilder von Fotos mit dem VectorMark® VMc5 Nd:YVO$_4$-Laser markiert.

An einigen Beispielen wurden weitere Markiertests mit zwei anderen Lasern erprobt:

1. Ein Frequenzverdoppelter Nd:YAG-Laser (532 nm) der Fa. Rofin-Sinar Laser GmbH in Bergkirchen, Modell PowerLine 20E SHG II,

2. Nd:YAG-Laser (1064 nm) der Fa. Trumpf in Schramberg, VectorMark® VMc3.

**Schichtdicken**

Die Folie wird in eine Formmasse eingebettet, mit einem Mikrotom durchgeschnitten und die Oberfläche mit Argon-Plasma angeätzt und die Schnittkante im Rasterelektronenmikroskop betrachtet. Durch die unterschiedliche Pigmentierung der Schichten sind die Schichtdicken leicht voneinander zu unterscheiden und auszumessen.

**Glanz**

Der Glanz der Folie wird nach DIN 67530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

Beispiele

In den nachfolgenden Beispielen wurden folgende Einsatzstoffe in Form von PET-Masterbatchen eingesetzt, die im Extruder auf die gewünschte Konzentration mit PET verdünnt wurden:

Als Partikel für Schlupf und Weißeinfärbung:

*Bariumsulfat*, Blanc-fixe XR HX der Fa. Sachtleben, Duisburg, DE, $d_{50}$: 0,55 $\mu$m
*kolloidales Siliciumdioxid,* Nyacol DP5540 der Fa. Nyacol, Ashland, MA, USA, mittlere Größe des Primärkorns: 100 nm, kaum agglomeriert
*pyrogenes Siliciumdioxid,* Aerosil TT600 der Fa. Degussa, Hanau, DE, mittlere Größe des Primärkorns: 40 nm, agglomeriert zu Teilchen mit einem $d_{50}$ von ca. 0,2 $\mu$m
*Siliciumdioxid-Grobpartikel,* Sylysia 430 der Fa. Fuji Sylysia, JP, $d_{50}$: 4,8 $\mu$m
*synthetisches (gefälltes) Siliciumdioxid,* Sylobloc 44 H der Fa. Grace, Worms, DE, $d_{50}$: 2,5 $\mu$m
*Titandioxid,* Rutil, $d_{50}$: 0,3 $\mu$m

Als Laseradditive:

*Lazerflair® 825,* Absorber zum Lasermarkieren der Fa. Merck, Darmstadt, DE (beschichtetes Schichtsilikat, s. DE-A-195 22 397 und andere Patentanmeldungen der Fa. Merck)
*Mark-it®*, Absorber zum Lasermarkieren der Fa. Engelhard, Iselin, NJ, USA (Antimondotiertes Zinnoxid, s. z. B. US-A-6,693,657 und andere Patentschriften der Fa. Engelhard)
*Micabs® A204* und *A206,* Additive zum Lasermarkieren der Fa. DSM, Geleen, NL, nach WO 2004/50766 und WO 2004/50767
*Phosphorhaltiges Zinn-Kupfer-Mischoxid* (s. z. B. WO 2006-42714)

**Beispiel 1 (erfindungsgemäß)**

Es wurden 3 Polymer-Mischungen in 3 Extrudern bei 285 °C aufgeschmolzen:

1. 99,73 Gew.-% Polyethylenterephthalat mit einem SV-Wert von 800, 0,12 Gew.-% synthetisches $SiO_2$ und 0,15 Gew.-% pyrogenes $SiO_2$ → Schicht A
2. 93,5 Gew.-% Polyethylenterephthalat mit einem SV-Wert von 800, 3,5 Gew.-% Titandioxid und 3 Gew.-% des Laser-Markier-Additivs Micabs® A204→ Schicht B
3. 99,73 Gew.-% Polyethylenterephthalat mit einem SV-Wert von 800, 1,0 Gew.-% synthetisches $SiO_2$ und 0,15 Gew.-% pyrogenes $SiO_2$ → 2. A-Schicht

Die Polymermischungen wurden in einem Adapter zusammengeführt und durch eine Breitschlitzdüse auf eine auf 60 °C temperierte Kühlwalze elektrostatisch angelegt. Anschließend wurde sie bei folgenden Bedingungen längs- und dann quergestreckt:

| | | | |
|---|---|---|---|
| Längsstreckung | Aufheiztemperatur | 75-115 | °C |
| | Strecktemperatur | 115 | °C |
| | Längsstreckverhältnis | 4,0 | |
| Querstreckung | Aufheiztemperatur | 100 | °C |
| | Strecktemperatur | 135 | °C |
| | Querstreckverhältnis | 4,0 | |
| Fixierung | Temperatur | 230 | °C |
| | Dauer | 3 | s |

Die so erhaltene Folie hatte eine Gesamtdicke von 50 $\mu$m, und die Deckschichten A waren beide 7 $\mu$m dick. Der Aufbau der Folie, die Eigenschaften und das Lasermarkierergebnis der Folie sind den Tabellen 1a und 2 zu entnehmen.

Zusätzlich zu dem in Tabelle 2 erfassten Markierversuch bei 1064 nm wurde ein Markierversuch bei 532 nm durchgeführt (Frequenzverdoppelte Nd:YAG-Laser). Bei einer Markiergeschwindigkeit von 1000 mm/s erhielt man das beste Markierergebnis bei der Einstellung 50 kHz und 27 Å. Die Farbnote war 4. Es konnten Passfotos mit einem guten Grautonverlauf bei 500 dpi (dots per inch) auf der Folie markiert werden.

**Beispiele 2 bis 8 (erfindungsgemäß)**

In ähnlicher Weise wie in Beispiel 1 wurden weitere Folien hergestellt, wobei die Schichtdicken sowie Art und Menge der Partikel und das Laseradditiv variiert wurden. Die Zusammensetzung und die Eigenschaften sind ebenfalls in Tabelle 1a und 2 zusammengefasst.

Zusätzlich zu den in Tabelle 2 erfassten Markierversuchen wurden bei Beispiel 5 und 8 mit dem Nd:YO$_4$-Laser Fotos auf den Folien markiert. Auch hier konnte ein guter Grautonverlauf erzielt werden.

**Beispiel 9 (erfindungsgemäß)**

In ähnlicher Weise wie in Beispiel 1 wurde eine Folie hergestellt, jedoch mit dem Unterschied, dass sie nur 2 Schichten hatte. Die Zusammensetzung und Schichtdicken sind in Tabelle 1a aufgelistet. Wie in Tabelle 2 gezeigt konnten gute Markierergebnisse erzielt werden, aber die markierten Stellen blieben auf der Unterlage kleben, weil die Rückseite der Folie aufgeschmolzen war.

**Beispiel 10 (erfindungsgemäß)**

Eine Folie mit einem ähnlichen Aufbau wie Beispiel 5 wurde hergestellt, mit dem Unterschied, dass auf der A'-Schicht eine weitere Schicht D aufgebracht war, die aus PET modifiziert mit 20 Mol-% Isophthalsäure bestand. Die Schicht D war 5 $\mu$m dick. Die Folie ließ sich bei 180 °C auf ECCS-Stahl laminieren mit der D-Schicht zum Blech gewandt. Die Lasermarkierergebnisse des so beschichteten Stahlblechs waren wie in Beispiel 5.

**Beispiel 11 (erfindungsgemäß)**

Eine Folie mit einem ähnlichen Aufbau wie Beispiel 5 wurde hergestellt, mit dem Unterschied, dass die Schicht B 65 $\mu$m dick war und anstelle der A'-Schicht eine andere Zusammensetzung verwendet wurde (C-Schicht), die aus PET modifiziert mit 20 Mol-% Isophthalsäure bestand. Die Folie ließ sich bei 180 °C auf ECCS-Stahl laminieren mit der D-Schicht zum Blech gewandt. Die Lasermarkierergebnisse des so beschichteten Stahlblechs waren wie in Beispiel 5.

**Vergleichsbeispiele V-1 bis V-7**

Es wurden in ähnlicher Weise Folien wie in den Beispielen 1 bis 11 hergestellt, wobei jedoch wesentliche Änderungen in der Zusammensetzung gemacht wurden. Die Zusammensetzung und der Schichtaufbau der Folien sind in der Tabelle 1b aufgeführt. Die Eigenschaften und Lasermarkierergebnisse sind in Tabelle 2 zusammengefasst.

**Vergleichsbeispiele V-8**

Der E-Modul und $\sigma$5-Wert einer handelsüblichen Polycarbonat-Folie, die für Lasermarkierung bestimmt ist, Makrofol ID 6-2 laserable, wurden gemessen:

E- Modul: 2,3 GPa      $\sigma$5-Wert: 58 MPa

Tabelle 1a: Aufbau und Rezeptur der erfindungsgemäßen Beispiele

| Beispiel | Erste Schicht (A) | | zweite Schicht (B) | | Dritte Schicht (A, A' oder C) | | Aussehen |
|---|---|---|---|---|---|---|---|
| | Rezeptur | Dicke $\mu$m | Rezeptur | Dicke $\mu$m | Rezeptur | Dicke $\mu$m | |
| 1 | PET mit 0,12 % synthetischem und 0,15 % pyrogenem SiO$_2$ | 7 | PET mit 3,5 % TiO$_2$ und 3 % Micabs® A204 | 36 | PET mit 0,12 % synthetischem und 0,15 % pyrogenem SiO$_2$ | 7 | weiß, glänzend |

(fortgesetzt)

| Beispiel | Erste Schicht (A) | | zweite Schicht (B) | | Dritte Schicht (A, A' oder C) | | Aussehen |
|---|---|---|---|---|---|---|---|
| | Rezeptur | Dicke $\mu$m | Rezeptur | Dicke $\mu$m | Rezeptur | Dicke $\mu$m | |
| 2 | PET mit 0,12 % synthetischem und 0,15 % pyrogenem $SiO_2$ | 7 | PET mit 3,5 % $TiO_2$ und 1 % Micabs® A206 | 36 | PET mit 0,12 % synthetischem und 0,15 % pyrogenem $SiO_2$ | 7 | weiß, glänzend |
| 3 | PET mit 0,12 % synthetischem und 0,15 % pyrogenem $SiO_2$ | 15 | PET mit 3,5 % $TiO_2$ und 5 % Micabs® A204 | 45 | PET mit 0,12 % synthetischem und 0,15 % pyrogenem $SiO_2$ | 15 | weiß, glänzend |
| 4 | PET mit 0,12 % synthetischem und 0,15 % pyrogenem $SiO_2$ | 10 | PET mit 3,5 % $TiO_2$ und 7 % Micabs® A204 | 45 | PET mit 0,12 % synthetischem und 0,15 % pyrogenem $SiO_2$ | 20 | weiß, glänzend |
| 5 | PET mit 0,12 % synthetischem $SiO_2$ | 15 | PET mit 3,5 % $TiO_2$ und 5 % Micabs® A206 | 45 | PET mit 0,12 % synthetischem $SiO_2$ | 15 | weiß, glänzend |
| 6 | PET mit 0,6% $SiO_2$-Grobpartikel | 15 | PET mit 3,5 % $TiO_2$ und 5 % Micabs® A206 | 45 | PET mit 0,12 % synthetischem $SiO_2$ | 15 | weiß, matt/ glänzend |
| 7 | PET mit 0,12 % synthetischem und 2,1 % kolloidalem $SiO_2$ | 15 | PET mit 3,5 % $TiO_2$ und 5 % Micabs® A206 | 45 | PET mit 0,12 % synthetischem und 2,1 % kolloidalem $SiO_2$ | 15 | weiß, glänzend |
| 8 | PET mit 0,12 % synthetischem $SiO_2$ | 15 | PET mit 18 % $BaSO_4$ und 5 % Micabs® A206 | 45 | PET mit 0,12% synthetischem $SiO_2$ | 15 | brillant weiß, glänzend |
| 9 | PET mit 0,12 % synthetischem und 0,15 % pyrogenem $SiO_2$ | 25 | PET mit 3,5 % $TiO_2$ und 5 % Micabs® A204 | 45 | - | | weiß, glänzend |

Tabelle 1b: Aufbau und Rezeptur der Vergleichsbeispiele

| Beispiel | erste Schicht (A) | | zweite Schicht (B) | | Dritte Schicht (A) | | Aussehen |
|---|---|---|---|---|---|---|---|
| | Rezeptur | Dicke $\mu$m | Rezeptur | Dicke | Rezeptur | Dicke $\mu$m | |
| V-1 | PET mit 1 % synthetischem und 1,25% pyrogenem $SiO_2$ | 15 | PET mit 3,5 % $TiO_2$ | 36 | PET mit 1 % synthetischem und 1,25% pyrogenem $SiO_2$ | 15 | weiß, glänzend |
| V-2 | PET mit 1 % synthetischem und 1,25% pyrogenem $SiO_2$ | 15 | PET mit 3,5 % $TiO_2$ und 0,5 % Lazerflair® 825 | 36 | PET mit 1 % synthetischem und 1,25% pyrogenem $SiO_2$ | 15 | weiß, glänzend |
| V-3 | PET mit 1 % synthetischem und 1,25% pyrogenem $SiO_2$ | 15 | PET mit 3,5 % $TiO_2$ und 0,3 % Mark-it® | 36 | PET mit 1 % synthetischem und 1,25% pyrogenem $SiO_2$ | 15 | weiß, glänzend |
| V-4 | PET mit 1 % synthetischem und 1,25% pyrogenem $SiO_2$ | 15 | PET mit 3,5 % $TiO_2$ und 1.2% phosphorhaltigem Zinn-Kupfer--Mischoxid | | PET mit 1 % synthetischem und 1,25% pyrogenem $SiO_2$ | 15 | weiß, glänzend |
| V-5 | PET mit 1 % synthetischem und 1,25% pyrogenem $SiO_2$ | 15 | PET mit 5 % Micabs® A204 | 36 | PET mit 1 % synthetischem und 1,25% pyrogenem $SiO_2$ | 15 | transluzent |
| V-6 | - | | PET mit 3,5 % $TiO_2$ und 5 % Micabs® A204 | 50 | - | | weiß, glänzend |
| V-7 | PET mit 1 % synthetischem und 1,25% pyrogenem $SiO_2$ | 2 | PET mit 18 % $BaSO_4$ und 5 % Micabs® A206 | 71 | PET mit 1 % synthetischem und 1,25% pyrogenem $SiO_2$ | 2 | brillant weiß, glänzend |

Tabelle 2: Eigenschaften der erfindungsgemäßen und Vergleichsbeispiele

| Beispiel | E-Modul (GPa) | | σ-5 (MPa) | | Glanz 60° | Lasermarkierung (VMc5 Nd:$YO_4$, 1064 nm) | | | | |
|---|---|---|---|---|---|---|---|---|---|---|
| | längs | quer | längs | quer | | Optimum | | Noten | | Kommentar |
| | | | | | | kHz. | P (%) | Farbe | Oberfläche | |
| 1 | 4,3 | 5,4 | 106 | 98 | 105 | 40 | 50 | 3 | C | |
| 2 | 4,2 | 5,5 | 100 | 97 | 106 | 40 | 50 | 3 | C | |
| 3 | 4,2 | 5,4 | 101 | 97 | 106 | 50 | 50 | 4 | B | |

(fortgesetzt)

| Beispiel | E-Modul (GPa) | | σ-5 (MPa) | | Glanz 60° | Lasermarkierung (VMc5 Nd:YO$_4$, 1064 nm) | | | | Kommentar |
|---|---|---|---|---|---|---|---|---|---|---|
| | | | | | | Optimum | | Noten | | |
| | längs | quer | längs | quer | | kHz. | P (%) | Farbe | Oberfläche | |
| 4 | 4,2 | 5,4 | 100 | 97 | 103 | 50 | 50 | 4 | B | Seite A, keine Löcher bei höherer Leistung |
| | | | | | 106 | 50 | 50 | 4 | B | Seite A', Löcher bei höherer Leistung |
| 5 | 4,2 | 5,5 | 100 | 96 | 106 | 50 | 40 | 5 | A | |
| | | | | | | 30 | 60 | 4 | A | mit VMc3 Nd: YAG-Laser |
| 6 | 4,1 | 5,5 | 101 | 96 | 45 | 50 | 40 | 5 | A | |
| 7 | 4,2 | 5,4 | 99 | 97 | 103 | 50 | 40 | 5 | A | |
| 8 | 4,1 | 5,9 | 92 | 92 | 104 | 50 | 40 | 5 | A | |
| | | | | | | 30 | 60 | 4 | A | mit VMc3 Nd: YAG-Laser |
| 9 | 4,1 | 5,4 | 95 | 96 | 108 | 50 | 40 | 5 | A | |
| 10 | 4,2 | 5,5 | 100 | 97 | 103 | 50 | 40 | 5 | A | auf der A-Seite beschreiben, D-Schicht schmolz dabei auf |
| V-1 | 4,1 | 5,4 | | | 105 | 60 | 60 | 1 | B | Markierung grau-braun, beste Ergebnisse bis 60 kHz, P=60 % |
| | | | | | | 70 | 60 | 1 | B | Markierung grau-braun, Versuch bis P=100 %, diese 70 kHz geringfügig dunkler, |
| V-2 | 4,2 | 5,4 | | | 103 | 30 | 50 | 2 | D | bei höherer Leistung und Frequenz durchgebrannt oder grau-braun |
| V-3 | 4,2 | 5,5 | | | 102 | 30 | 50 | 2 | D | wie V-2 |
| V-4 | 4,2 | 5,5 | | | 99 | 30 | 50 | 2 | D | wie V-2, noch etwas brauner |

(fortgesetzt)

| Beispiel | E-Modul (GPa) | | σ-5 (MPa) | | Glanz 60° | Lasermarkierung (VMc5 Nd:YO₄, 1064 nm) | | | | |
|---|---|---|---|---|---|---|---|---|---|---|
| | längs | quer | längs | quer | | Optimum | | Noten | | Kommentar |
| | | | | | | kHz. | P (%) | Farbe | Oberfläche | |
| V-5 | 4,1 | 5,5 | | | 102 | 60 | 60 | 0 | A | ganz leichte Bläschen ab 40 kHz u. 40 % P |
| V-6 | 4,3 | 5,4 | | | 86 | 40 | 50 | 2 | D | höhere Leistungen, nicht dunkler, nur ablatiert und durchgebrannt |
| V-7 | 4,2 | 5,5 | | | 103 | 40 | 50 | 2 | D | wie V-6 |

Die Beispiele und Vergleichsbeispiele verdeutlichen, dass nur die Kombination der wesentlichen Parameter der Erfindung, d. h. der spezielle Schichtaufbau, das Vorhandensein eines Weißpigments in der Schicht B und die Verwendung eines Laserabsorbers, der mit einem carbonisierenden Polymeren beschichtet ist, zu guter Lasermarkierbarkeit bei biaxial orientierten Polyesterfolien führt. Vergleichsbeispiel 1 zeigt, dass ohne Laserabsorber nur flaue Markierungen in den Polyesterfolien ohne Laseradditiv erzielbar sind. Vergleichsbeispiele 2 bis 4 zeigen, dass mit Laseradditiven ohne carbonisierenden Bestandteil nur mäßig bessere Markierergebnisse bei Polyesterfolien erreicht werden. Vergleichsbeispiel 5 zeigt, dass ohne das Weißpigment in der Schicht B gar keine Markierung möglich ist. Vergleichsbeispiele 6 und 7 zeigen, dass ohne Deckschicht oder mit zu dünner Deckschicht auch keine kontrastreichen Markierungen in Polyesterfolien erzielt werden können. Dagegen sind die Markierergebnisse bei den erfindungsgemäßen Beispielen gut bis exzellent.

**Patentansprüche**

1. Biaxial orientierte, fixierte, mindestens zweischichtige coextrudierte Folie aus Polyethylenterephthalat (PET) oder Polyethylen-2,6-naphthalat (PEN), wobei das PET oder PEN zusätzliche, von Ethylenglykol und/oder Terephthalsäure oder Naphthalin-2,6-dicarbonsäure verschiedene Comonomer-abgeleitete Bausteine enthalten kann, wobei die Folie eine Basisschicht und mindestens eine Deckschicht umfasst, **dadurch gekennzeichnet, dass** die Basisschicht einen Laserabsorber, der mit einem carbonisierenden Polymeren beschichtet ist, und ein Weißpigment enthält.

2. Folie nach Anspruch 1, **dadurch gekennzeichnet, dass** sie mindestens 3 Schichten hat und die äußeren Deckschichten keinen Laserabsorber enthalten.

3. Folie nach Anspruch 2, **dadurch gekennzeichnet, dass** eine äußere Schicht niedriger schmelzend ist als die laserabsorberhaltige Schicht.

4. Folie nach Anspruch 1, **dadurch gekennzeichnet, dass** sie aus 2 Schichten besteht.

5. Folie nach einem oder mehreren der Ansprüche 1 bis 4, **dadurch gekennzeichnet, dass** das carbonisierende Polymere um den Laserabsorber, welcher einen Kern bildet, mit einem zweiten, kompatibilisierenden Polymeren chemisch gebunden ist.

6. Folie nach Anspruch 5, **dadurch gekennzeichnet, dass** ein weiteres scherverdünnendes Polymeres enthalten ist.

7. Folie nach Anspruch 5, **dadurch gekennzeichnet, dass** der Kern des Laserabsorbers einen Durchmesser von 10 nm bis 10 μm besitzt.

8. Folie nach einem oder mehreren der Ansprüche 1 bis 7, **dadurch gekennzeichnet, dass** das carbonisierende Polymere aus einer Gruppe ausgewählt ist, die Polyamide, Polyester, Polycarbonate und deren Mischungen umfasst.

9. Folie nach einem oder mehreren der Ansprüche 5 bis 8, **dadurch gekennzeichnet, dass** das kompatibilisierende Polymere aus einer Gruppe ausgewählt ist, die mit Maleinsäureanhydrid modifiziertes Polyethylen, Polypropylen und deren Mischungen umfasst.

10. Folie nach einem oder mehreren der Ansprüche 5 bis 9, **dadurch gekennzeichnet, dass** das scherverdünnende Polymere ein Polyolefin ist.

11. Folie nach einem oder mehreren der Ansprüche 1 bis 10, **dadurch gekennzeichnet, dass** die Gesamtdicke 23 $\mu$m bis 1 mm, bevorzugt 30 $\mu$m bis 1 mm, besonders bevorzugt 40 bis 700 $\mu$m, ganz besonders bevorzugt 65 bis 600 $\mu$m, beträgt.

12. Folie nach einem oder mehreren der Ansprüche 1 bis 11, **dadurch gekennzeichnet, dass** mindestens eine der äußeren Schichten, welche keinen Laserabsorber enthält, mindestens 3 $\mu$m, bevorzugt mindestens 5 $\mu$m, besonders bevorzugt mindestens 7 $\mu$m und ganz besonders bevorzugt mindestens 12 $\mu$m, dick ist.

13. Folie nach einem oder mehreren der Ansprüche 1 bis 9, **dadurch gekennzeichnet, dass** das Weißpigment Bariumsulfat und/oder Titandioxid ist.

14. Folie nach einem oder mehreren der Ansprüche 1 bis 10, **dadurch gekennzeichnet, dass** mindestens eine der äußeren Deckschichten Partikel als Schlupfadditiv enthält.

15. Folie nach einem oder mehreren der Ansprüche 1 bis 10, **dadurch gekennzeichnet, dass** auf mindestens einer der äußeren coextrudierten Schichten eine partikelhaltige Beschichtung aufgetragen ist.

**Claims**

1. A biaxially oriented, set, at least two-layer coextruded film composed of polyethylene terephthalate (PET) or polyethylene 2,6-naphthalate (PEN), where the PET or PEN can contain additional comonomer-derived units differing from ethylene glycol and/or terephthalic acid or naphthalene-2,6-dicarboxylic acid, where the film encompasses a base layer and at least one outer layer, wherein the base layer comprises a white pigment and a laser absorber which has been coated with a carbonizing polymer.

2. The film as claimed in claim 1, which has at least three layers, wherein the exterior outer layers comprise no laser absorber.

3. The film as claimed in claim 2, wherein the melting point of one exterior layer is lower than that of the laser-absorber-containing layer.

4. The film as claimed in claim 1, which is composed of two layers.

5. The film as claimed in one or more of claims 1 to 4, wherein the carbonizing polymer has been chemically bonded to a second, compatibilizing polymer, around the laser absorber, which forms a core.

6. The film as claimed in claim 5, which comprises a further pseudoplastic polymer.

7. The film as claimed in claim 5, wherein the diameter of the core of the laser absorber is from 10 nm to 10 $\mu$m.

8. The film as claimed in one or more of claims 1 to 7, wherein the carbonizing polymer has been selected from a group which encompasses polyamides, polyesters, polycarbonates and their mixtures.

9. The film as claimed in one or more of claims 5 to 8, wherein the compatibilizing polymer has been selected from a group which encompasses maleic-anhydride-modified polyethylene, polypropylene, and their mixtures.

10. The film as claimed in one or more of claims 5 to 9, wherein the pseudoplastic polymer is a polyolefin.

**11.** The film as claimed in one or more of claims 1 to 10, whose total thickness is from 23 $\mu$m to 1 mm, preferably 30 $\mu$m to 1 mm, more preferably from 40 to 700 $\mu$m, very particularly preferably from 65 to 600 $\mu$m.

**12.** The film as claimed in one or more of claims 1 to 11, wherein the thickness of at least one of the exterior layers, which comprises no laser absorber, is at least 3 $\mu$m, preferably 5 $\mu$m, more preferably at least 7 $\mu$m and very particularly preferably at least 12 $\mu$m.

**13.** The film as claimed in one or more of claims 1 to 9, wherein the white pigment is barium sulfate and/or titanium dioxide.

**14.** The film as claimed in one or more of claims 1 to 10, wherein at least one of the exterior outer layers comprises particles as slip additive.

**15.** The film as claimed in one or more of claims 1 to 10, wherein a coating comprising particles has been applied on at least one of the exterior coextruded layer.

**Revendications**

**1.** Feuille orientée biaxialement, fixée et coextrudée sous la forme d'au moins deux couches, en poly éthylène téréphtalate (PET) ou en polyéthylène-2,6-naphtalate (PEN), dans laquelle le PET ou le PEN peut contenir d'autres composants dérivés d'un comonomère différent de l'éthylèneglycol et/ou de l'acide téréphtalique ou de l'acide naphtalène-2,6-dicarboxylique, la feuille comprenant une couche de base et au moins une couche de recouvrement, **caractérisée en ce que** la couche de base contient un agent absorbeur de rayonnement laser, qui est recouvert d'un polymère se carbonisant, et un pigment blanc.

**2.** Feuille selon la revendication 1, **caractérisée en ce qu'**elle présente au moins 3 couches, les couches de recouvrement externes ne contenant aucun agent absorbeur de rayonnement laser.

**3.** Feuille selon la revendication 2, **caractérisée en ce qu'**une couche externe présente un point de fusion plus faible que la couche contenant l'agent absorbeur de rayonnement laser.

**4.** Feuille selon la revendication 1, **caractérisée en ce qu'**elle est constituée de 2 couches.

**5.** Feuille selon une ou plusieurs des revendications 1 à 4, **caractérisée en ce que** le polymère se carbonisant autour de l'agent absorbeur de rayonnement laser, qui forme un noyau, est chimiquement lié à un second polymère exerçant un effet de compatibilisation.

**6.** Feuille selon la revendication 5, **caractérisée en ce qu'**elle contient un autre polymère se fluidifiant par cisaillement.

**7.** Feuille selon la revendication 5, **caractérisée en ce que** le noyau de l'agent absorbeur de rayonnement laser présente un diamètre de 10 nm à 10 $\mu$m.

**8.** Feuille selon une ou plusieurs des revendications 1 à 7, **caractérisée en ce que** le polymère se carbonisant est choisi dans un groupe comprenant des polyamides, des polyesters, des polycarbonates et leurs mélanges.

**9.** Feuille selon une ou plusieurs des revendications 5 à 8, **caractérisée en ce que** le polymère exerçant un effet de compatibilisation est choisi dans un groupe comprenant, sous forme modifiée par de l'anhydride d'acide maléique, du polyéthylène, du polypropylène et leurs mélanges.

**10.** Feuille selon une ou plusieurs des revendications 5 à 9, **caractérisée en ce que** le polymère se fluidifiant par cisaillement est une polyoléfine.

**11.** Feuille selon une ou plusieurs des revendications 1 à 10, **caractérisée en ce que** l'épaisseur totale est de 23 $\mu$m à 1 mm, de préférence, de 30 $\mu$m à 1 mm, mieux encore, de 40 à 700 $\mu$m, bien mieux encore, de 65 à 600 $\mu$m.

**12.** Feuille selon une ou plusieurs des revendications 1 à 11, **caractérisée en ce qu'**au moins l'une des couches externes, qui ne contient aucun agent absorbeur de rayonnement laser, présente une épaisseur d'au moins 3 $\mu$m, de préférence, d'au moins 5 $\mu$m, mieux encore, d'au moins 7 $\mu$m et, bien mieux encore, d'au moins 12 $\mu$m.

**13.** Feuille selon une ou plusieurs des revendications 1 à 9, **caractérisée en ce que** le pigment blanc est le sulfate de baryum et/ou le dioxyde de titane.

**14.** Feuille selon une ou plusieurs des revendications 1 à 10, **caractérisée en ce qu'**au moins l'une des couches de recouvrement externes contient des particules comme additif de fluage.

**15.** Feuille selon une ou plusieurs des revendications 1 à 10, **caractérisée en ce que** l'on applique un revêtement contenant des particules sur au moins une des couches externes coextrudées.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0866750 A
- WO 0318700 A
- US 6723259 A
- EP 0198771 A
- JP 2226470 A
- DE 19961304 A
- DE 19522397 A
- US 6693657 A
- WO 200642714 A
- EP 0991523 A

- WO 200450766 A
- WO 200450767 A
- DE 19631283 A
- EP 1458574 A
- JP 7276575 A
- JP 2002273832 A
- EP 1256597 A
- EP 1125967 A
- EP 0605130 A